# EUROPÄISCHE PATENTANMELDUNG

(11) **EP 3 955 424 A1**
(43) Veröffentlichungstag der Anmeldung: **16.02.2022**
(21) Anmeldenummer: 20190188.1
(22) Anmeldetag: 10.08.2020
(51) Int. Cl.: H02K 1/20, H02K 3/12, H02K 3/24, H02K 3/34, H02K 9/197, H02K 9/12, H02K 3/48, H02K 1/32, H02K 1/18, H02K 3/487, H02K 15/10, H02K 15/06

(54) **DYNAMOELEKTRISCHE MASCHINE MIT FLÜSSIGKEITSKÜHLUNG**

(71) Anmelder: Siemens Aktiengesellschaft, 80333 München (DE)
(72) Erfinder: Teringl, Claus, 94060 Pocking (DE); Winklhofer, Michael, 94060 Pocking (DE)
(74) Vertreter: Michalski Hüttermann & Partner Patentanwälte mbB

(57) **Zusammenfassung**

Die Erfindung betrifft eine dynamoelektrische Maschine (1) mit einem Stator (2) und einem Rotor (3),
wobei zumindest der Stator (2) flüssigkeitsgekühlt ist, wobei zumindest der Stator (2) ein Wicklungssystem aufweist, das in Nuten (18) eines magnetisch leitfähigen Körpers des Stators (2) eingebettet ist,
wobei das Wicklungssystem zwischen einem Leiter des Wicklungssystems und einer Nutwandung (19) eine Hauptisolierung (16) aufweist,
wobei zwischen Hauptisolierung (16) und Nutwandung (19) zumindest ein Kühlkanal (9) vorgesehen ist, indem die Hauptisolierung (16) unterschiedliche radiale Ausdehnungen aufweist.

## Beschreibung

Die Erfindung betrifft eine dynamoelektrische Maschine mit Flüssigkeitskühlung und ein Verfahren zur Herstellung von dazu erforderlichen Kühlkanälen.

Dynamoelektrische Maschinen müssen aufgrund ihrer Verluste, Eisenverluste, Leiterverluste etc. gekühlt werden. Für eine effiziente Kühlung reicht meist eine Luftkühlung nicht mehr aus, so dass eine Flüssigkeitskühlung, insbesondere Wasserkühlung oder Ölkühlung, vorgesehen wird. Dafür sind jedoch Kühlkanäle in dem magnetisch leitfähigen Körper der dynamoelektrischen Maschine, also Stator und/oder Rotor, notwendig. Diese Kühlkanäle sind gegebenenfalls in einem Blechschnitt vorzusehen, wie dies der DE 24 62 150 oder der EP 0 684 682 B1 zu entnehmen ist. Dadurch verändern sich jedoch der magnetische Fluss im Betrieb der dynamoelektrischen Maschine, so dass weitere Verluste entstehen.

Ausgehend davon liegt der Erfindung die Aufgabe zugrunde, eine dynamoelektrische Maschine mit Flüssigkeitskühlung zu schaffen, die einfach herzustellen ist und eine hohe Effizienz aufweist, ohne dass die magnetischen Eigenschaften des magnetischen leitfähigen Körpers des Stators und/oder Rotors beeinträchtigt werden.

Die Lösung der gestellten Aufgabe gelingt durch eine dynamoelektrische Maschine mit einem Stator und einem Rotor,
wobei zumindest der Stator flüssigkeitsgekühlt ist,
wobei zumindest der Stator ein Wicklungssystem aufweist, das in Nuten eines magnetisch leitfähigen Körpers des Stators eingebettet ist,
wobei das Wicklungssystem zwischen einem Leiter des Wicklungssystems und einer Nutwandung eine Hauptisolierung aufweist,
wobei zwischen Hauptisolierung und Nutwandung zumindest ein Kühlkanal vorgesehen ist, indem die Hauptisolierung unterschiedliche radiale Ausdehnungen aufweist.

Erfindungsgemäß befindet sich nunmehr zwischen Nutwandung und Hauptisolierung ein insbesondere axial verlaufender Kühlkanal. Der Kühlkanal ist in die Hauptisolierung des Wicklungssystems eingeprägt. Dies geschieht während der Herstellung des Wicklungssystems, bei dem ein oder mehrere Leiter mit einer Hauptisolierung versehen werden und dabei die Hauptisolierung mit einer vorgegebenen Prägung derart gepresst wird, dass ein oder mehrere Vertiefungen in der Hauptisolierung entstehen. Diese Kühlkanalprägungen bilden in der Maschine zusammen mit den Nutwandungen axial verlaufende Kühlkanäle.

Die Formgestaltung der Nut und des magnetisch leitfähigen Körpers, also eines Blechpakets, kann somit erhalten bleiben. Demnach bleiben auch die magnetischen Verhältnisse des magnetisch leitfähigen Körpers unverändert vorteilhaft.

Das Wicklungssystem ist vorteilhafterweise durch vorab herstellbare Formspulen aufgebaut, die während des Herstellprozesses bereits mit den Kühlkanalprägungen versehen werden können.

Um die Formspule radial über einen Nutschlitz einzusetzen ist es vorteilhaft, wenn die Nutwandungen parallel oder mit einem geringen Öffnungswinkel Richtung Luftspalt verlaufen.

Das Wicklungssystem ist dabei aus Leitern geformt, die Formspulen bilden. Diese Formspulen werden vorab gewickelt und isoliert. Nachdem die Formspulen ihre Hauptisolierung erhalten haben, erhalten sie im Bereich der späteren Nutabschnitte Vertiefungen. Danach werden die Formspulen mittels Schablonen in die jeweilige Form gebracht.

Vorteilhafterweise befindet sich die Vertiefung der Hauptisolierung im mittleren Bereich des Leiters bzw. der Spule. Damit ergibt sich eine Führung der Spule beim Einlegen in die Nut und eine grobe Abdichtung Richtung Luftspalt. Die Hauptisolierung einer Formspule ist nunmehr, im Querschnitt betrachtet, doppelt-T-Förmig ausgeführt.

Die Erfindung kann bei Einschicht- und Mehrschichtwicklungen eingesetzt werden. Je nachdem ergeben sich ein Kühlkanal oder mehrere Kühlkanäle in einer Nut.

Die Prägung der Hauptisolierung einer Formspule kann auf einer, zwei, drei oder allen Seiten der Spule vorgenommen werden, vorzugsweise wird diese Kühlkanalprägung auf den Längsseiten der Spulen vorgenommen.

Dadurch, dass die Kühlkanäle, insbesondere die Kühlkanalprägungen, axial über den magnetisch leitfähigen Körper ragen, wird die Einströmung einer Kühlflüssigkeit erleichtert.

Dadurch, dass ein Spaltrohr zwischen Stator und Rotor vorgesehen ist, können unterschiedliche Kühlprinzipien eingesetzt werden.

Dadurch, dass der magnetisch leitfähige Körper, insbesondere als Blechpaket ausgeführt ist, können bisherige Blechschnitte verwendet werden, da sich die Kühlkanäle über die Kühlkanalprägungen der Hauptisolierung ergeben.

Dadurch, dass der magnetisch leitfähige Körper axial in mindestens zwei Teilkörper unterteilt ist, ergeben sich radiale Kühlkanäle, die eine zweiflutige Kühlung des Stators ermöglichen. Dies verbessert die Kühlleistung und führt zu einem gleichmäßigeren Temperaturverlauf axial längs des Stators.

Derartige dynamoelektrische Maschinen werden vorzugsweise bei Windkraftanlagen als Generatoren eingesetzt, da sie bei kompakter Bauweise eine hohe Leistungsdichte aufweisen.

Die Erfindung sowie weitere vorteilhafte Ausgestaltungen der Erfindung werden anhand prinzipiell dargestellter Ausführungsbeispiele näher erläutert; darin zeigen:
- FIG 1: Pressung der Hauptisolation mit einer Detailansicht,
- FIG 2: Anordnung einer Zweischichtwicklung in einer Nut,
- FIG 3: perspektivische Detailansicht einer Zweischichtwicklung in einer Nut eines Stators,
- FIG 4: perspektivische Detailansicht eines Stators,
- FIG 5: Teillängsschnitt einer dynamoelektrischen Maschine.

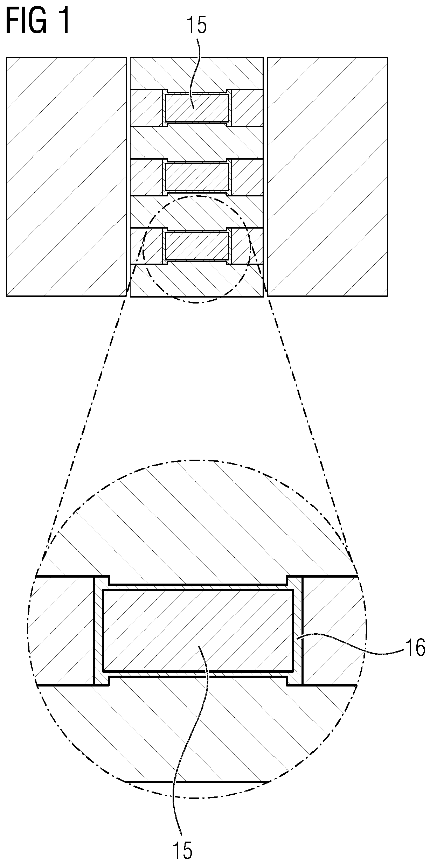

FIG 1 zeigt einen Verfahrensschritt eines prinzipiellen Herstellungsverfahrens einer Formspule 15, deren Leiter aus mehreren Teilleitern oder aus einem Einzelleiter besteht. Sofern Teilleiter vorhanden sind, sind diese zumindest abschnittsweise von einer Teilleiterisolierung umgeben, wobei der gesamte Leiter, zumindest aber im Bereich der Nut 18, also axial innerhalb des magnetisch leitfähigen Körpers, wie einem Blechpaket 4 von einer Hauptisolierung 16 umgeben ist.

Um nunmehr einen erfindungsgemäßen Kühlkanal 9 zu gestalten, wird über eine Kühlkanalprägung, die mittels eines Stempels einer Presse ausgeführt werden kann, die Hauptisolierung 16 an vorgebbaren Bereichen der Hauptisolierung zusammengedrückt. Im vorliegenden, nicht einschränkenden Ausführungsbeispiel geschieht dies vor allem an den Längsseiten der Formspule 15. Durch die Pressung tritt die Hauptisolierung 16 in den vorgegebenen Bereichen gegenüber der ursprünglichen Ausdehnung um einen vorgegebenen Abstand zurück.

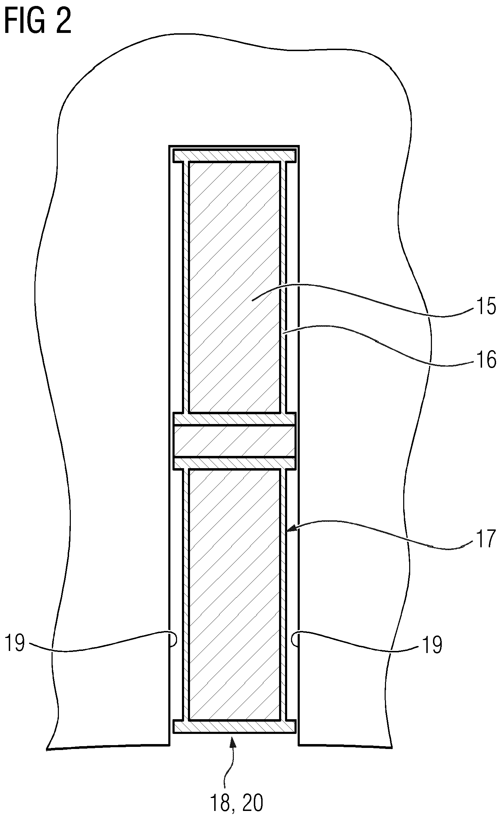

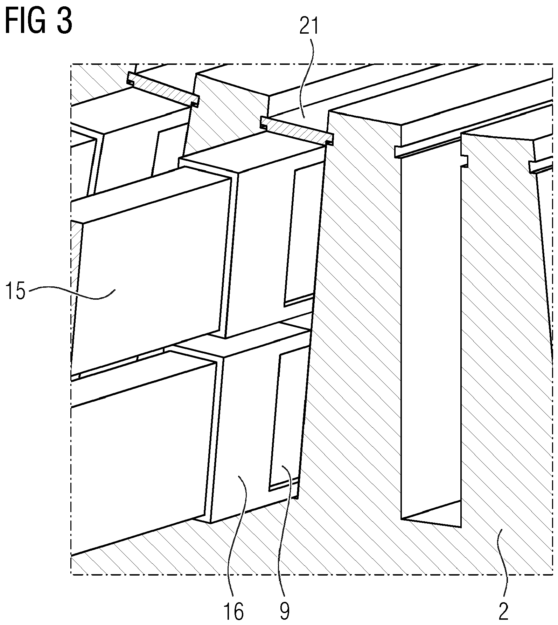

In FIG 2 wird beispielhaft eine Zweischichtwicklung, wie sie in einer Nut 18 angeordnet ist, gezeigt. Dabei sind zwei Formspulen 15 radial übereinander in der Nut 18 angeordnet und durch ein Zwischenelement voneinander getrennt. Jede Formspule 15 weist eine Hauptisolierung 16 auf, an deren Längsseiten durch die Prägung, wie oben beschrieben, die Hauptisolierung zurücktritt, so dass sich dann ein Abstand zwischen einer Nutwandung 19 und der Hauptisolierung 16 ergibt. Dies gestaltet dann einen axial verlaufenden Kühlkanal 9 in einem Stator 2. Die Formspulen 15 werden in die Nut 18 über einen Nutschlitz 20 radial eingesetzt. Die Nutwandungen 19 sind parallel oder mit einem geringen Öffnungswinkel Richtung Luftspalt versehen, um die Montage der Formspulen 15 zu erleichtern. Der Nutschlitz 20 kann, wie in FIG 3 gezeigt, durch einen Nutverschluss 21 abgeschlossenen werden, um das Wicklungssystem, in diesem Fall die Formspulen 15, in der Nut 18 dauerhaft zu positionieren. Je nach Ausführung des Nutverschlusses 21 gestaltet dieser auch das Magnetfeld des Luftspaltes im Betrieb einer dynamoelektrischen Maschine 1 mit.

Durch die reduzierte radiale Dicke der Hauptisolierung 16 an den vorgegebenen Bereichen der Formspule 15 verschlechtert sich die Isolation nicht u.a. auch deshalb, weil eine Ölkühlung eingesetzt wird.

FIG 3 zeigt in einer perspektivischen Detaildarstellung einen Stator 2 mit teilweise durch ein Wicklungssystem belegten Nuten 18. In den durch das Wicklungssystem belegten Nuten 18 befindet sich eine Zweischichtwicklung, d.h. es sind radial betrachtet, zwei Formspulen 15, wie in FIG 2 bereits beschrieben, radial übereinander angeordnet. Die Nut 18 ist mittels eines Nutverschlusses 21 abgeschlossen und in Ausnehmungen von Zähnen des Blechpakets 4 fixiert. Der Kühlkanal 9 ragt axial über die Stirnseite des Blechpakets 4 des Stators 2 um einer Flüssigkeit, insbesondere Öl, den axialen Zugang zu dem Kühlkanal 9 zu ermöglichen. In diesem Ausführungsbeispiel sind somit pro Nut 18 vier parallele Kühlkanäle 9 vorhanden. Jede Formspule 15 hat zwei auf ihrer Längsseite angeordnete Kühlkanalprägungen 17, die durch Pressung der Hauptisolation 16 gebildet wurden.

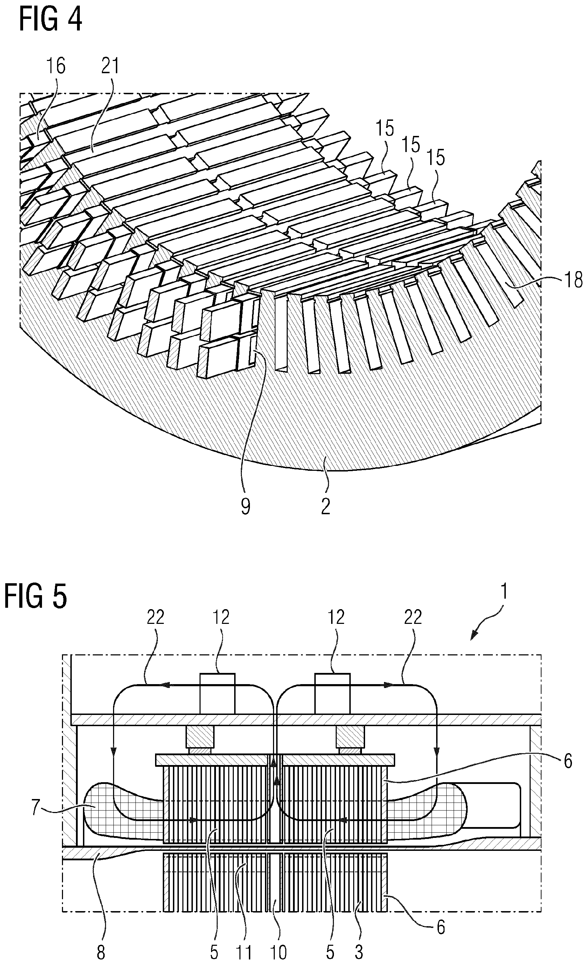

FIG 4 zeigt in einer weiteren perspektivischen Detaildarstellung einen Stator 2 mit teilweise durch ein Wicklungssystem belegten Nuten 18. Dabei ist gezeigt, dass der magnetisch leitfähige Körper des Stators 2, beispielsweise ein Blechpaket 4, in Teilblechpakete 5 aufgeteilt ist. Damit ergeben sich zwischen den Teilblechpaketen 5 radial verlaufende Schlitze, die radiale Kühlkanäle 10 bilden, die einem Kühlmittelfluss 22 aus den Kühlkanälen 9 kommend gestatten, radial auszutreten. Der Nutverschluss 21 ist axial durchgehend ausgeführt und bildet somit einen Abschluss zum Luftspalt, wobei jedoch zwischen den Zähnen der Teilblechpakete 5 radiale Kühlkanäle 10 bzw. Schlitze vorhanden sind, in denen Kühlflüssigkeit, beispielsweise Öl, radial austreten kann und, wie später gezeigt, dementsprechenden Wärmetauschern 12 zuführbar ist.

FIG 5 zeigt in einer prinzipiellen Darstellung einen Teillängsschnitt einer dynamoelektrischen Maschine 1. Dabei ist ein Rotor 3 von dem Stator 2 durch ein Spaltrohr 8 beabstandet, das durch den Luftspalt der dynamoelektrischen Maschine 1 verläuft und es damit ermöglicht, unterschiedliche Kühlmedien für Stator 2 und Rotor 3 vorzusehen. In diesem Ausführungsbeispiel wird nunmehr der Stator 2 durch eine Flüssigkeitskühlung gekühlt. Das Blechpaket 4 des Stators 2 ist dabei aus zwei Teilblechpaketen 5 aufgebaut, so dass sich zwischen den Teilblechpaketen 5 ein radialer Kühlkanal 10 ergibt. Die Teilblechpakete 5 sind durch Druckplatten 6 fixiert. Axial aus den Stirnseiten des Blechpakets 4 ragen Wickelköpfe 7 des Wicklungssystems. Das Spaltrohr 8 ist gegenüber weiteren Gehäuseabschnitten durch nicht näher dargestellte Dichtelemente 13 abgedichtet. Der Rotor 3 ist axial einstückig oder ebenfalls mit Teilblechpaketen aufgebaut. In diesen Ausführungen verläuft ein Kühlkanal 11 axial durch das Blechpaket des Rotors 3. Durch Trennung von Stator 2 und Rotor 3 mittels des Spaltrohres 8 ist es nunmehr möglich, den Rotor 3 mit einer Luftkühlung auszustatten, der thermisch vom Stator 2 separiert ist.

Die Kühlflüssigkeit, insbesondere Öl, wird an einer Stirnseite des Blechpakets 4 über die Wickelköpfe 7 axial in die Kühlkanäle 9 des Stators eingespeist. Über den axialen Verlauf des Wickelkopfes 7 und des Wicklungssystems in der Nut 18 erhitzt sich die Kühlflüssigkeit und wird über den radialen Kühlkanal 10 radial nach außen in Wärmetauscher 12 gefördert. Dort wird die Kühlflüssigkeit rückgekühlt und erneut in den Kreislauf eingespeist.

## Patentansprüche

1. Dynamoelektrische Maschine (1) mit einem Stator (2) und einem Rotor (3),
wobei zumindest der Stator (2) flüssigkeitsgekühlt ist,
wobei zumindest der Stator (2) ein Wicklungssystem aufweist, das in Nuten (18) eines magnetisch leitfähigen Körpers des Stators (2) eingebettet ist,
wobei das Wicklungssystem zwischen einem Leiter des Wicklungssystems und einer Nutwandung (19) eine Hauptisolierung (16) aufweist,
wobei zwischen Hauptisolierung (16) und Nutwandung (19) zumindest ein Kühlkanal (9) vorgesehen ist, indem die Hauptisolierung (16) unterschiedliche radiale Ausdehnungen aufweist.

2. Dynamoelektrische Maschine (1) nach Anspruch 1, **da**- **durch gekennzeichnet**, dass zumindest einer der Kühlkanäle (9) in einer Kühlkanalprägung (17) der Hauptisolierung (16) vorgesehen ist.

3. Dynamoelektrische Maschine (1) nach Anspruch 1 oder 2, **dadurch gekennzeichnet, dass** das Wicklungssystem aus Formspulen (15) aufgebaut ist.

4. Dynamoelektrische Maschine (1) nach Anspruch 3, **da**- **durch gekennzeichnet**, dass die Spulenschenkel der Formspulen (15) beidseitig Kühlkanalprägungen (17) aufweisen.

5. Dynamoelektrische Maschine (1) nach einem der vorhergehenden Ansprüche, **dadurch gekennzeichnet, dass** die Nutwandungen (19) parallel verlaufen.

6. Dynamoelektrische Maschine (1) nach einem der vorhergehenden Ansprüche, **dadurch gekennzeichnet, dass** die Kühlkanäle (9), insbesondere die Kühlkanalprägungen (17), axial über den magnetisch leitfähigen Körper ragen.

7. Dynamoelektrische Maschine (1) nach einem der vorhergehenden Ansprüche, **dadurch gekennzeichnet, dass** ein Spaltrohr (8) Stator (2) und Rotor (3) voneinander trennt.

8. Dynamoelektrische Maschine (1) nach einem der vorhergehenden Ansprüche, **dadurch gekennzeichnet, dass** der magnetisch leitfähige Körper, insbesondere als Blechpaket (4) ausgeführt ist.

9. Dynamoelektrische Maschine (1) nach einem der vorhergehenden Ansprüche, **dadurch gekennzeichnet, dass** der magnetisch leitfähige Körper axial in mindestens zwei Teilkörper (5) unterteilt ist, so dass sich radiale Kühlkanäle (10) ergeben.

10. Windkraftanlage mit zumindest einer dynamoelektrischen Maschine (1) nach einem der vorhergehenden Ansprüche.
